(19) Europäisches Patentamt
European Patent Office
Office européen des brevets

(11) **EP 3 138 689 A1**

(12) **EUROPEAN PATENT APPLICATION**

(43) Date of publication:
08.03.2017 Bulletin 2017/10

(51) Int Cl.:
**B32B 17/10** *(2006.01)*

(21) Application number: 16185665.3

(22) Date of filing: 25.08.2016

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(30) Priority: 31.08.2015 JP 2015171393

(71) Applicant: **Asahi Glass Company, Limited
Tokyo 100-8405 (JP)**

(72) Inventors:
• NOTSU, Keiji
Tokyo, 100-8405 (JP)
• SADAKANE, Shunsuke
Tokyo, 100-8405 (JP)
• NARITA, Makoto
Tokyo, 100-8405 (JP)
• NISHIHAMA, Jirou
Tokyo, 100-8405 (JP)

(74) Representative: **Müller-Boré & Partner
Patentanwälte PartG mbB
Friedenheimer Brücke 21
80639 München (DE)**

(54) **LAMINATED PLATE, AND METHOD OF PRODUCING LAMINATED PLATE**

(57) A laminated plate includes a first plate; a second plate; and an intermediate film for bonding the first plate and the second plate, wherein the first plate includes a first main surface arranged at a side opposite to the intermediate film, and a second main surface that contacts the intermediate film, wherein the second plate has a third main surface that contacts the intermediate film, and a fourth main surface arranged at a side opposite to the intermediate film, wherein, upon the bonding by the intermediate film being released, a radius of curvature of the second main surface is smaller than that of the third main surface both in a transverse section and in a longitudinal section, and wherein a maximum value of bending compressive stress at an outer peripheral portion of the fourth main surface is less than or equal to 100 MPa.

## FIG.3

1      **EP 3 138 689 A1**      2

## Description

BACKGROUND OF THE INVENTION

1. Field of the Invention

The present invention relates to a laminated plate, and a method of producing the laminated plate.

2. Description of the Related Art

Patent Document 1 discloses a laminated glass having a first glass plate, a second glass plate, and an intermediate film. The thickness of the first glass plate is greater than that of the second glass plate; and the first glass plate is pre-formed, so that the first glass plate is bent to form a curved shape, prior to being bonded with the second glass plate. Whereas, the second glass plate is formed to have a flat shape; and the second glass plate is deformed along the first glass plate during bonding. A pre-bending process to form the second glass plate can be omitted.

[Patent Document]

[Patent Document 1] Japanese Unexamined Patent Publication No. 2007-197288

SUMMARY OF THE INVENTION

The first glass plate includes a first main surface arranged at a side opposite to the intermediate film; and a second main surface that contacts the intermediate film. The second glass plate also includes a third main surface that contacts the intermediate film; and a fourth main surface arranged at a side opposite to the intermediate film. Additionally, the intermediate film is arranged between the second main surface and the third main surface; and the laminated glass is formed by bonding the second main surface with the third main surface.

Among cross sections including a normal line at the centroid of the first main surface, the cross section in which the radius of curvature of the first main surface becomes the maximum is referred to as the transverse section; and the cross section perpendicular to the transverse section is referred to as the longitudinal section.

If bonding between the first glass plate and the second glass plate by the intermediate film were released, the first glass plate and the second glass plate would be returned to their natural states prior to bonding. Here, a radius of curvature of the second main surface may be smaller than a radius of curvature of the third main surface, both in a cross section corresponding to a transverse section and in a cross section corresponding to a longitudinal section.

In this case, bending compressive stress is generated at least in a portion of an outer periphery of the fourth main surface, which is in a bonding state. In such a bonding state, a fold may be formed at a portion of the outer periphery of the fourth main surface where bending compressive stress is generated.

This problem arises in the laminated plate. The laminated plate includes the first plate, the second plate, and the intermediate film bonding the first plate and the second plate.

The present invention is achieved in view of the above-described problem, and a main object is to provide a laminated plate in which an occurrence of a fold is suppressed.

In order to solve the above-described problem, according to an aspect of the present invention, there is provided a laminated plate including a first plate having a curved shape, a second plate having a shape following the first plate, and an intermediate film for bonding the first plate and the second plate, wherein the first plate includes a first main surface arranged at a side opposite to the intermediate film, and a second main surface that contacts the intermediate film, the first plate having higher bending stiffness, compared to the second plate, wherein the second plate is a glass plate having a third main surface that contacts the intermediate film, and a fourth main surface arranged at a side opposite to the intermediate film, wherein, when, among cross sections including a normal line at a centroid of the first main surface, a cross section in which a radius of curvature of the first main surface becomes a maximum is a transverse section, and a cross section perpendicular to the transverse section is a longitudinal section, upon the bonding by the intermediate film being released, a radius of curvature of the second main surface is smaller than a radius of curvature of the third main surface both in a cross section corresponding to the transverse section and in a cross section corresponding to the longitudinal section, and wherein a maximum value of bending compressive stress at the outer peripheral portion of the fourth main surface is less than or equal to 100 MPa.

According to the aspect of the present invention, there is provided the laminated plate in which an occurrence of a fold is suppressed.

BRIEF DESCRIPTION OF THE DRAWINGS

Other objects, features and advantages of the present invention will become more apparent from the following detailed description when read in conjunction with the accompanying drawings.

FIG. 1 illustrates a transverse section of a laminated glass according to an embodiment;
FIG. 2 illustrates a longitudinal section of the laminated glass according to the embodiment;
FIG. 3 illustrates cross sections of a first glass plate and a second glass plate according to the embodiment in a natural state prior to bonding, which is a cross-sectional view corresponding to the transverse section of FIG. 1;

2

FIG. 4 illustrates the cross sections of the first glass plate and the second glass plate according to the embodiment in the natural state prior to bonding, which is a cross-sectional view corresponding to the longitudinal section of FIG. 2; and

FIG. 5 is a diagram illustrating an example of a relationship among a radius of curvature x of a first main surface in the transverse section, a radius of curvature y of the first main surface in the longitudinal section, and a maximum value $P_{max}$ of bending compressive stress at an outer peripheral portion on a fourth main surface.

## DETAILED DESCRIPTION OF THE PREFERRED EMBODIMENTS

An embodiment for implementing the present invention is described below by referring to the drawings. In the drawings, the same or corresponding reference numerals are attached to the same or corresponding components, and thereby the description may be omitted.

In the following description, the laminated glass corresponds to the laminated plate in the claims, the first glass plate corresponds to the first plate in the claims, and the second glass plate corresponds to the second plate in the claims; however, the present invention is not limited to these. For example, the first plate may be a resin plate or a metal plate, instead of the glass plate. Additionally, the first plate may have a single layer structure, or a multiple layer structure. For example, the first glass plate may be a plate such that a metal layer is formed on a glass plate or a resin plate.

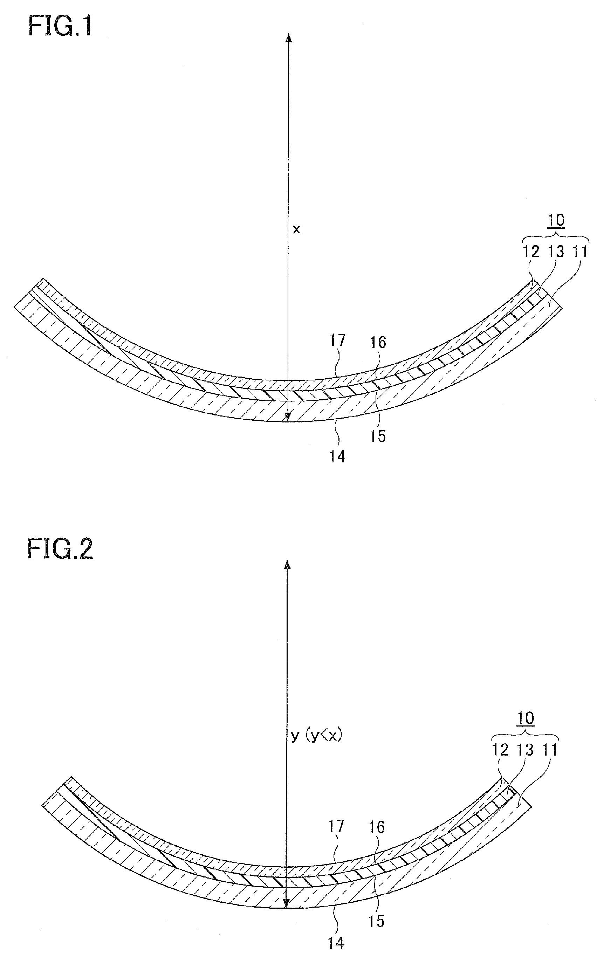

FIG. 1 is a lateral cross-sectional view illustrating a state, after bonding, of a laminated glass according to the embodiment. FIG. 2 is a longitudinal cross-sectional view illustrating a state, after bonding, of the laminated glass according to the embodiment.

The laminated glass 10 is attached, for example, to a window. The window may be an window of a building or an window of a vehicle; and the window may be an window of an automobile, for example. The window of the automobile may be any one of a windshield, a side window, a rear window, and a sunroof window of the automobile, for example. The laminated glass 10 includes a first glass plate 11; a second glass plate 12; and an intermediate film 13.

The first glass plate 11 has a curved shaped. The first glass plate 11 may be any one of an unstrengthened glass and a strengthened glass. The unstrengthened glass is obtained by shaping a melted glass to have a plate-like shape, and gradually cooling the shaped glass. As an examples of the shaping method, there are a float method, a fusion method, and so forth. The strengthened glass may be a physically strengthened glass or a chemically strengthened glass. The physically strengthened glass is obtained by strengthening a surface of the glass plate by quenching the uniformly heated glass plate from a temperature in the vicinity of a softening point, so that residual compressive stress is generated on the surface of the glass by a temperature difference between the surface of the glass and an inner portion of the glass. The chemically strengthened glass is obtained by strengthening a surface of the glass by causing residual compressive stress to be generated on the surface of the glass by an ion exchange method.

The first glass plate 11 has higher bending stiffness, compared to the bending stiffness of the second glass plate 12. For a case where the first glass plate 11 and the second glass plate 12 are formed of the same materials, a plate thickness of the first glass plate 11 is greater than a plate thickness of the second glass plate 12. In general, if the materials are the same, the bending stiffness is proportional to the third power of the plate thickness; and a displacement amount by bending is inversely proportional to the third power of the plate thickness.

The second glass plate 12 has a shape that follows the shape of the first glass plate 11. The second glass plate 12 may be an unstrengthened glass or a strengthened glass. The strengthened glass may be a physically strengthened glass or a chemically strengthened glass. In FIG. 1 and FIG. 2, the plate thickness of the second glass plate 12 is less than the plate thickness of the first glass plate 11; however, the plate thickness of the second glass plate 12 may be greater than the plate thickness of the first glass plate 11, or the plate thickness of the second glass plate 12 may be equal to the plate thickness of the first glass plate 11. It suffices if the first glass plate 11 has a bending stiffness that is higher than the bending stiffness of the second glass plate 12.

The plate thickness of the second glass plate 12 is preferably less than the plate thickness of the first glass plate 11. The plate thickness of the second glass plate 12 is preferably greater than or equal to 0.2 mm and less than or equal to 1.0 mm; more preferably greater than or equal to 0.3 mm and less than or equal to 0.8 mm; and further more preferably greater than or equal to 0.4 mm and less than or equal to 0.7 mm.

By forming the second glass plate 12 so that the plate thickness is less than or equal to 1.0 mm, the weight of the laminated glass can be reduced. Additionally, by forming the second glass plate 12 so that the plate thickness is greater than or equal to 0.2 mm, the bending stiffness of the second glass plate 12 is enhanced, and a worker can easily handle the glass plate 12 during transportation of the second glass plate 12.

Furthermore, the plate thickness of the first glass plate 11 is preferably greater than or equal to 1.5 mm and less than or equal to 4.0 mm; more preferably greater than or equal to 1.7 mm and less than or equal to 3.5 mm; and further more preferably greater than or equal to 2.0 mm and less than or equal to 3.0 mm.

By forming the first glass plate 11 so that the plate thickness is less than or equal to 4.0 mm, the weight of the laminated glass can be reduced. Furthermore, by forming the first glass plate 11 so that the plate thickness is greater than or equal to 1.5 mm, sufficient bending stiffness can be obtained for the laminated glass.

Additionally, a value that is obtained by dividing the plate thickness of the second glass plate 12 by the plate thickness of the first glass plate 11 is preferably greater than or equal to 0.1 and less than or equal to 0.5; more preferably greater than or equal to 0.13 and less than or equal to 0.48; and further more preferably greater than or equal to 0.15 and less than or equal to 0.45. By forming the first glass plate 11 and the second glass plate 12 so that the value obtained by dividing the plate thickness of the second glass plate 12 by the plate thickness of the first glass plate 11 is greater than or equal to 0.1 and less than or equal to 0.5, the laminated glass can be obtained which is light-weight and which has high stiffness.

The intermediate film 13 bonds the first glass plate 11 and the second glass plate 12. The intermediate film 13 is formed of, for example, a thermoplastic resin, a thermosetting resin, or an ultraviolet curing resin; and the intermediate film 13 is formed by solidifying these resins. Here, solidification includes hardening. The intermediate film 13 is preferably formed of one or more materials selected from a vinyl-based polymer, ethylenevinyl monomer copolymer, styrene-based copolymer, a polyurethane resin, a fluorine resin, a silicon-based resin, and an acrylic resin. As a typical thermoplastic resin, there is a polyvinyl butyral resin (PVB). The silicone-based resin and the acrylic resin are typical examples of the thermosetting resin.

The intermediate film 13 may include an ultraviolet absorber. As the ultraviolet absorber, a generic ultraviolet absorber can be used; and a benzotriazole-based ultraviolet absorber, a benzophenone-based ultraviolet absorber, a salicylate-based ultraviolet absorber, a cyanoacrylate-based ultraviolet absorber, a triazine-based ultraviolet absorber, an okizanirido-based ultraviolet absorber, a nickel complex salt-based absorber, an inorganic-based ultraviolet absorber, and so forth can be used, for example. As the inorganic-based ultraviolet absorber, zinc oxide particles, titanium oxide particles, cerium oxide particles, zirconium oxide particles, mica particles, kaolin particles, sericite particles, and so forth can be used.

The intermediate film 13 may have a single layer structure, or a multiple layer structure; and the intermediate film 13 may include, in addition to a bonding layer, an electrically conductive layer, for example. The electrically conductive layer has a function, such as an antenna function or a heater function. The antenna receives radio waves from outside. The heater is used for melting ice and snow, and for removing fogging caused by condensation, for example. The electrically conductive layer is formed of an electrically conductive material; and, for example, the electrically conductive layer is formed of a metal. Here, the type of the metal is not particularly limited; however, for example, gold, silver, nickel, copper, aluminum, tin, cobalt, or an alloy including at least one element of these element can be used. The electrically conductive layer may be formed, for example, by patterning a metal foil; and the electrically conductive layer may be arranged between a plurality of bonding layers. The intermediate layer may further include, in addition to the bonding layer and the electrically conductive layer, an insulating layer, for example.

Additionally, to suppress an oscillation caused by a small fluctuation, a sound insulation intermediate film having a small shear elastic modulus may be used for the intermediate film 13. In the sound insulation intermediate film, films having different shear elastic moduluses may be laminated in a layered manner. Furthermore, for a case where the laminated glass 10 is used as a head-up display, the intermediate film may be a wedge-shaped intermediate film such that the cross section has a wedge shape, so as to prevent occurrence of a double contour image.

The method of producing the laminated glass 10 includes a bonding process for bonding the first glass plate 11 and the second glass plate 12 by the intermediate film 13. In the bonding process, an installation device, such as an autoclave, is used.

Here, as illustrated in FIG. 1 and FIG. 2, the first glass plate 11 includes a first main surface 14 that is arranged at a side opposite to the intermediate film 13, and a second main surface 15 that contacts the intermediate film 13. Further, the second glass plate 12 includes a third main surface 16 that contacts the intermediate film 13, and a fourth main surface 17 that is arranged at a side opposite to the intermediate film 13. Furthermore, the intermediate film 13 is arranged between the second main surface 15 and the third main surface 16; and the laminated glass 10 is formed by bonding the second main surface 15 and the third main surface 16.

Among cross sections including a normal line at the centroid of the first main surface 14, the cross section in which the radius of curvature of the first main surface 14 becomes the maximum is referred to as a transverse section; and the cross section perpendicular to the transverse section is referred to as a longitudinal section. The radius of curvature of the first main surface 14 is represented, for each cross section, by a radius of curvature of a circle that passes through three points, i.e., both ends of the first main surface 14, and the centroid of the first main surface 14. Not only a curved portion, but also a flat portion may exist between the ends of the first main surface 14. The radius of curvature x of the first main surface 14 in the transverse section is less than or equal to $1 \times 10^6$ mm, for example. The radius of curvature y ($y < x$) of the first main surface 14 in the longitudinal section is less than or equal to $1 \times 10^5$ mm, for example.

In both transverse section and longitudinal section, the laminated glass 10 has a curved shape. For example, in both transverse section and longitudinal section, the first main surface 14 is a convex surface that protrudes toward outside (the side opposite to the intermediate film 13); and the fourth main surface 17 is a concave surface that recesses toward outside (the side opposite to the intermediate film 13).

Note that the arrangement of the first glass plate 11 and the second glass plate 12 may be opposite to the arrangement of FIG. 1 and FIG. 2. Namely, in both transverse section and longitudinal section, the first main surface 14 may be a concave surface that recesses toward outside, and the fourth main surface 17 is a convex surface that protrudes toward outside.

Upon bonding between the first glass plate 11 and the second glass plate 12 by the intermediate film 13 being released, the first glass plate 11 and the second glass plate 12 return to natural states. In the present specification, the "natural state" means a state where there is no bending stress.

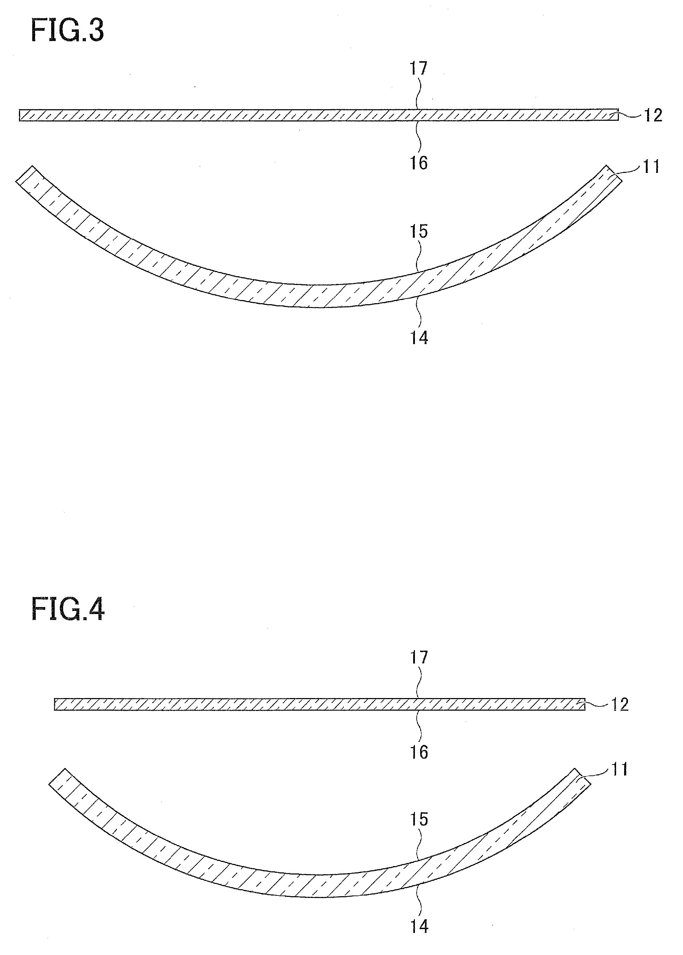

FIG. 3 is a cross-sectional view of the first glass plate 11 and the second glass plate 12 in the natural states prior to bonding according to the embodiment; and FIG. 3 is the cross-sectional view that corresponds to the transverse-sectional view of FIG. 1. FIG. 4 is a cross-sectional view of the first glass plate 11 and the second glass plate 12 in the natural states prior to bonding according to the embodiment; and FIG. 4 is the cross-sectional view that corresponds to the longitudinal sectional view of FIG. 2.

In the natural state prior to bonding, the first glass plate 11 has a curved shape. The first glass plate 11 is pre-formed to be bent, prior to bonding. For bending, gravity molding and press molding are used, for example. Bending is performed while heating. During bending, a physically strengthening process may be applied. Note that a chemically strengthening process is applied, after bending and prior to bonding.

During bonding, the first glass plate 11 may almost not be bent. For example, if the plate thickness of the first glass plate 11 is sufficiently greater than the plate thickness of the second glass plate 12, the first glass plate 11 is almost not to be bent, during bonding. In general, the bending stiffness is proportional to the third power of the plate thickness, and a displacement amount by bending is inversely proportional to the third power of the plate thickness.

In the natural state prior to bonding, the second glass plate 12 has a flat shape. A process of bending the second glass plate 12 can be omitted, and the time and effort for the bending process can be omitted. Note that, in the natural state prior to bonding, the second glass plate 12 may have a curved shape.

During bonding, the second glass plate 12 is bent; and, after bonding, bending compressive stress is generated at an outer peripheral portion of the fourth main surface 17. The bending compressive stress can be measured by a commercially available surface stress meter.

In this specification, the outer peripheral portion is, for example, a region that is separated from an outer edge of the glass plate by less than or equal to 20 mm toward the center of the glass plate.

For a case where the second glass plate 12 is a strengthened glass, both residual compressive stress and bending compressive stress are generated at the outer peripheral portion of the fourth main surface 17 after bonding. The residual compressive stress is caused by strengthening, so that the residual compressive stress is generated prior to bonding. In this case, the bending compressive stress can be calculated by measuring the compressive stress at the outer peripheral portion of the fourth main surface 17 after bonding, and subtracting, from the measured value, the compressive stress at the outer peripheral portion of the fourth main surface 17 in the natural state.

As illustrated in FIG. 3 and FIG. 4, in both the cross section corresponding to the transverse section and the cross section corresponding to the longitudinal section, the second main surface 15 has, in the natural state prior to bonding, a radius of curvature that is smaller than the radius of curvature of the third main surface 16. Consequently, in the fourth main surface 17 after bonding, bending compressive stress is generated at the entire outer periphery of the fourth main surface 17, instead of a portion of the outer periphery of the fourth main surface 17.

Here, as in the case of the embodiment, upon bonding the second glass plate 12 along the first glass plate 11, which is pre-bent prior to bonding, and which has radii of curvature in both transverse section and longitudinal section, bending tensile stress is generated at the centroid of the fourth main surface 17.

The inventors have found that, if the maximum value $P_{max}$ of the bending compressive stress at the outer peripheral portion of the fourth main surface 17 is less than or equal to 100 MPa, generation of a fold at the outer peripheral portion of the fourth main surface 17 can be suppressed. The maximum value $P_{max}$ is preferably less than or equal to 90 MPa; and more preferably less than or equal to 80 MPa.

The maximum value $P_{max}$ is preferably greater than or equal to 10 MPa. If the maximum value $P_{max}$ is greater than or equal to 10 MPa, the laminated glass 10 is sufficiently bent in both transverse section and longitudinal section, and geometric stiffness of the laminated glass 10 is sufficiently high, so that deformation of the laminated glass 10 against a load can be suppressed. As the load, there are a snow load, a wind load, and so forth. Additionally, if the maximum, value $P_{max}$ is greater than or equal to 10 MPa, the outer peripheral portion of the fourth main surface 17 is hardly damaged, and the second glass plate 12 tends not be broken from the outer peripheral portion. The maximum value $P_{max}$ is more preferably greater than or equal to 15 MPa.

Additionally, if an average value of the bending compressive stress at the outer peripheral portion of the fourth main surface 17 is greater than or equal to 5 MPa, the outer peripheral portion of the fourth main surface 17 is hardly damaged, and the second glass plate 12 tends not be broken from the outer peripheral portion. The average value of the bending compressive stress at the outer peripheral portion of the fourth main surface 17 is more preferably greater than or equal to 7 MPa; and further more preferably greater than or equal to 10 MPa.

Furthermore, for a case where there is bending tensile stress at the outer peripheral portion of the fourth main surface 17, if the maximum value of the bending tensile stress is less than or equal to 15 MPa, even if a crack is generated at the outer peripheral portion of the fourth main surface 17, the crack tends not to propagate, and the second glass plate 12 tends not to be broken from the outer peripheral portion. The maximum value of the bending tensile stress at the outer peripheral portion of the fourth main surface 17 is more preferably less than or equal to 10 MPa; and further more preferably less than or equal to 7 MPa.

Table 1 shows an example of a relationship among a radius of curvature x (mm) of the first main surface 14 in the transverse section, a radius of curvature y (mm) of the first main surface 14 in the longitudinal section, and the maximum value $P_{max}$ (MPa) of the bending compressive stress at the outer peripheral portion of the fourth main surface 17.

[Table 1]

|  | x (mm) | y (mm) | $P_{max}$ (MPa) |
|---|---|---|---|
| Example 1 | 42461 | 1502 | 19.9 |
| Example 2 | 26757 | 1234 | 35.1 |
| Example 3 | 22688 | 1108 | 39.0 |
| Example 4 | 14995 | 1094 | 55.3 |
| Example 5 | 13964 | 1125 | 45.6 |
| Example 6 | 28581 | 1051 | 36.3 |
| Example 7 | $1 \times 10^{21}$ | 5998 | 3.7 |
| Example 8 | 13157 | 2421 | 21.4 |
| Example 9 | 4557 | 3442 | 65.0 |
| Example 10 | 21621 | 1448 | 34.4 |

In Table 1, the maximum value $P_{max}$ was calculated under the same conditions, except for the radius of curvature x and the radius of curvature y. The maximum value $P_{max}$ was calculated by a finite element method by using general stress analysis software. Here, it was assumed that, in the natural state prior to bonding, the first glass plate 11 had a curved shape, a plate thickness of 4.0 mm, a Young's modulus of 71.5 GPa, and a Poisson's ratio of 0.23. Further, it was assumed that, in the natural state prior to bonding, the second glass plate 12 had a flat shape, a plate thickness of 0.5 mm, a Young's modulus of 71.5 GPa, and a Poisson's ratio of 0.23. Furthermore, it was assumed that, in the natural state prior to bonding, the intermediate film 13 had a film thickness of 0.76 mm, a Young's modulus of 5 MPa, and a Poisson's ratio of 0.45. It was assumed that there was no level difference on an edge surface of the laminated glass 10 after bonding; that a longitudinal width of the laminated glass 10 was 550 mm; and that a transverse width of the laminated glass 10 was 980 mm. Note that, even if, in the natural state prior to bonding, the shape and sizes, the plate thickness, and the Young's modulus are slightly varied, the tendency of the result does not change.

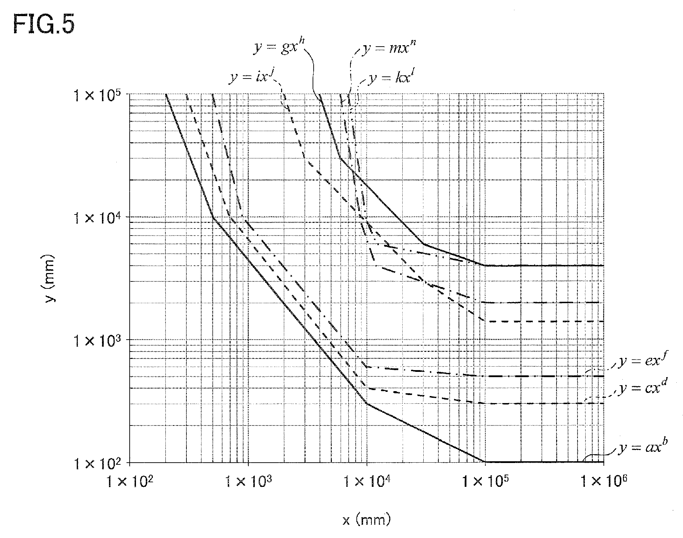

FIG. 5 is a diagram showing an example of a relationship among the radius of curvature x of the first main surface 14 in the transverse section, the radius of curvature y of the first main surface 14 in the longitudinal section, and the maximum value $P_{max}$ of the bending compressive stress at the outer peripheral portion of the fourth main surface 17. In FIG. 5, the relational expression between x and y such that $P_{max}$ is the threshold value is created based on the result of the stress analysis, which is shown in Table 1, for example.

If the following formulas (1) through (3) are satisfied, $P_{max}$ is less than or equal to 100 MPa, and generation of a fold at the outer peripheral portion of the fourth main surface 17 can be suppressed, as described above.

$$x \leq 1 \times 10^6 \quad \dots \quad (1)$$

$$y \leq 1 \times 10^5 \quad \dots \quad (2)$$

$$y \geq ax^b \quad \dots \quad (3)$$

In the formula (3), a is a coefficient and b is an exponent with a base of x; if x is greater than or equal to $2 \times 10^2$ and less than $5 \times 10^2$, a is $6.06 \times 10^{10}$ and b is -2.51; if x is greater than or equal to $5 \times 10^2$ and less than $1 \times 10^4$, a is $1.44 \times 10^7$ and b is -1.17; if x is greater than or equal to $1 \times 10^4$ and less than $1 \times 10^5$, a is $2.43 \times 10^4$ and b is $-4.77 \times 10^{-1}$; and if x is greater than or equal to $1 \times 10^5$ and less than or equal to $1 \times 10^6$, a is $1.00 \times 10^2$ and b is 0.

If, in addition to the above-described formulas (1) through (3), the following formula (4) is satisfied, $P_{max}$ is less than or equal to 90 MPa, and generation of a fold at the outer peripheral portion of the fourth main surface 17 can be suppressed, as described above.

$$y \geq cx^4 \quad \dots \quad (4)$$

In the formula (4), c is a coefficient and d is an exponent with a base of x; if x is greater than or equal to $3 \times 10^2$ and less than $7 \times 10^2$, C is $5.39 \times 10^{11}$ and d is -2.72; if $\times$ is greater than or equal to $7 \times 10^2$ and less

than $1 \times 10^4$, C is $2.78 \times 10^7$ and d is -1.21; if x is greater than or equal to $1 \times 10^4$ and less than $1 \times 10^5$, C is $1.26 \times 10^3$ and d is $-1.25 \times 10^{-1}$; and if x is greater than or equal to $1 \times 10^5$ and less than or equal to $1 \times 10^6$, C is $2.99 \times 10^2$ and d is 0.

If, in addition to the above-described formulas (1) through (3), the following formula (5) is satisfied, $P_{max}$ is less than or equal to 80 MPa, and generation of a fold at the outer peripheral portion of the fourth main surface 17 can further be suppressed, as described above.

$$y \geq ex^f \quad \ldots \quad (5)$$

In the formula (5), e is a coefficient and f is an exponent with a base of x; if x is greater than or equal to $5 \times 10^2$ and less than $9 \times 10^2$, e is $3.74 \times 10^{15}$ and f is -3.92; if x is greater than or equal to $9 \times 10^2$ and less than $1 \times 10^4$, e is $2.83 \times 10^7$ and f is -1.17; if x is greater than or equal to $1 \times 10^4$ and less than $1 \times 10^5$, e is $1.24 \times 10^3$ and f is $-7.92 \times 10^{-2}$; and if x is greater than or equal to $1 \times 10^5$ and less than or equal to $1 \times 10^6$, e is $4.98 \times 10^2$ and f is 0.

If, in addition to the above-described formulas (1) through (3), the following formula (6) is satisfied, $P_{max}$ is greater than or equal to 10 MPa, and deformation of the laminated glass 10 against a load can be suppressed, as described above.

$$y \leq gx^h \quad \ldots \quad (6)$$

In the formula (6), g is a coefficient and h is an exponent with a base of x; if x is greater than or equal to $4 \times 10^3$ and less than $6 \times 10^3$, g is $4.96 \times 10^{15}$ and h is -2.97; if x is greater than or equal to $6 \times 10^3$ and less than $3 \times 10^4$, g is $1.80 \times 10^8$ and h is -1.00; if x is greater than or equal to $3 \times 10^4$ and less than $1 \times 10^5$, g is $1.93 \times 10^3$ and h is $-3.37 \times 10^{-1}$; and if x is greater than or equal to $1 \times 10^5$ and less than or equal to $1 \times 10^6$, g is $3.99 \times 10^3$ and h is 0.

If, in addition to the above-described formulas (1) through (3), the following formula (7) is satisfied, $P_{max}$ is greater than or equal to 15 MPa, and deformation of the laminated glass 10 against a load can be suppressed, as described above.

$$y \leq ix^j \quad \ldots \quad (7)$$

In the formula (7), i is a coefficient and j is an exponent with a base of x; if x is greater than or equal to $2 \times 10^3$ and less than $3 \times 10^3$, i is $6.34 \times 10^{19}$ and j is -2.97; if x is greater than or equal to $3 \times 10^3$ and less than $3 \times 10^4$, i is $9.00 \times 10^7$ and j is -1.00; if x is greater than or equal to $3 \times 10^4$ and less than $1 \times 10^5$, i is $2.05 \times 10^6$ and j is $-6.33 \times 10^{-1}$; and if x is greater than or

equal to $1 \times 10^5$ and less than or equal to $1 \times 10^6$, i is $1.40 \times 10^3$ and j is 0.

Furthermore, in FIG. 5, the relational expression between x and y with which bending stiffness can be obtained that is the same level as the bending stiffness of a laminated glass having an arc-cylindrical shape is calculated by the finite element method by using the above-described general stress analysis software. An amount of displacement, which is caused by a load, of the centroid of the laminated glass is calculated by the finite element method, and the bending stiffness is calculated based on the calculated displacement amount. For the calculation, in a state where the entire outer periphery of the laminated glass is supported by rollers from below so that the four corners of the laminated glass can be positioned on the same horizontal plane, and a top surface of the laminated glass can be a convex surface protruding upward, a uniformly distributed load of 2000 $N/m^2$ is applied, from above, to the entire top surface of the laminated glass. Note that, the values that are the same as those of Table 1 are used for the values of the plate thickness, the Young's modulus, the Poisson's ratio, the longitudinal width, the transverse width, and so forth.

If, in addition to the above-described formulas (1) through (3), the following formula (8) is satisfied, bending stiffness can be obtained that is the same level as the bending stiffness of a laminated glass having an arc-cylindrical shape, where x is infinite and y is 4000 mm; and deformation of the laminated glass 10 against a load can be suppressed.

$$y \leq kx^l \quad \ldots \quad (8)$$

In the formula (8), k is a coefficient and 1 is an exponent with a base of x; if x is greater than or equal to $7 \times 10^3$ and less than $1 \times 10^4$, k is $9.09 \times 10^{30}$ and 1 is -6.75; if x is greater than or equal to $1 \times 10^4$ and less than $1.2 \times 10^4$, k is $7.08 \times 10^{12}$ and 1 is -2.22; if x is greater than or equal to $1.2 \times 10^4$ and less than $1 \times 10^5$, k is $3.62 \times 10^4$ and 1 is $-1.91 \times 10^{-1}$; and if $\times$ is greater than or equal to $1 \times 10^5$ and less than or equal to $1 \times 10^6$, k is $4.02 \times 10^3$ and 1 is 0.

If, in addition to the above-described formulas (1) through (3), the following formula (9) is satisfied, bending stiffness can be obtained that is the same level as the bending stiffness of a laminated glass having an arc-cylindrical shape, where x is infinite and y is 2000 mm; and deformation of the laminated glass 10 against a load can be suppressed.

$$y \leq mx^n \quad \ldots \quad (9)$$

In the formula (9), m is a coefficient and n is an exponent with a base of x; if x is greater than or equal to

$6 \times 10^3$ and less than $9 \times 10^3$, m is $2.74 \times 10^{27}$ and n is -5.94; if x is greater than or equal to $9 \times 10^3$ and less than $1.2 \times 10^4$, m is $1.26 \times 10^{15}$ and n is -2.82; if x is greater than or equal to $1.2 \times 10^4$ and less than $1 \times 10^5$, m is $8.62 \times 10^4$ and n is $-3.27 \times 10^{-1}$; and if x is greater than or equal to $1 \times 10^5$ and less than or equal to $1 \times 10^6$, m is $2.00 \times 10^3$ and n is 0.

The laminated plate and the method of producing the laminated plate are described above by the embodiment. However, the present invention is not limited to the above-described embodiment, and various modifications and improvements may be made within the scope of the gist of the present invention described in the claims.

For example, the laminated plate may be a combination of the first plate that is a metal plate, such as a body or a pillar of an automobile; and the second plate that is a glass plate. Further, the laminated plate may be a combination of the first plate that is a resin plate, and the second plate that is a glass plate; and an instrument panel, a center console, a dashboard, and so forth of an automobile may be formed of the laminated plate. Furthermore, the laminated plate may be a combination of the first plate that is a resin plate, and the second plate that is a glass plate; and a display member layer, such as a liquid crystal, may be provided between the first plate and the second plate.

The present application is based on and claims the benefit of priority of Japanese Patent Application No. 2015-171393 filed on August 31, 2015, the entire contents of which are hereby incorporated by reference.

## DESCRIPTION OF THE REFERENCE NUMERALS

10: Laminated glass

11: First glass plate

12: Second glass plate

13: Intermediate film

14: First main surface

15: Second main surface

16: Third main surface

17: Fourth main surface

## Claims

1. A laminated plate comprising:

   a first plate having a curved shape;
   a second plate having a shape following the first plate; and
   an intermediate film for bonding the first plate and the second plate,
   wherein the first plate includes a first main surface arranged at a side opposite to the intermediate film, and a second main surface that contacts the intermediate film, the first plate having higher bending stiffness, compared to the second plate,
   wherein the second plate is a glass plate having a third main surface that contacts the intermediate film, and a fourth main surface arranged at a side opposite to the intermediate film,
   wherein, when, among cross sections including a normal line at a centroid of the first main surface, a cross section in which a radius of curvature of the first main surface becomes a maximum is a transverse section, and a cross section perpendicular to the transverse section is a longitudinal section, upon the bonding by the intermediate film being released, a radius of curvature of the second main surface is smaller than a radius of curvature of the third main surface both in a cross section corresponding to the transverse section and in a cross section corresponding to the longitudinal section, and
   wherein a maximum value of bending compressive stress at an outer peripheral portion of the fourth main surface is less than or equal to 100 MPa.

2. The laminated plate according to claim 1, wherein the maximum value of the bending compressive stress is less than or equal to 90 MPa.

3. The laminated plate according to claim 2, wherein the maximum value of the bending compressive stress is less than or equal to 80 MPa.

4. The laminated plate according to any one of claims 1 to 3, wherein the maximum value of the bending compressive stress is greater than or equal to 10 MPa.

5. The laminated plate according to claim 4, wherein the maximum value of the bending compressive stress is greater than or equal to 15 MPa.

6. A laminated plate comprising:

   a first plate having a curved shape;
   a second plate having a shape following the first plate; and
   an intermediate film for bonding the first plate and the second plate,
   wherein the first plate includes a first main surface arranged at a side opposite to the intermediate film, and a second main surface that contacts the intermediate film, the first plate having higher bending stiffness, compared to the second plate,

wherein the second plate is a glass plate having a third main surface that contacts the intermediate film, and a fourth main surface arranged at a side opposite to the intermediate film,

wherein, when, among cross sections including a normal line at a centroid of the first main surface, a cross section in which a radius of curvature of the first main surface becomes a maximum is a transverse section, and a cross section perpendicular to the transverse section is a longitudinal section, upon the bonding by the intermediate film being released, a radius of curvature of the second main surface is smaller than a radius of curvature of the third main surface both in a cross section corresponding to the transverse section and in a cross section corresponding to the longitudinal section,

wherein, when a radius of curvature (mm) of the first main surface in the transverse section is x, and a radius of curvature of the first main surface in the longitudinal section is y, following formulas (1) through (3) are satisfied:

$$x \leq 1 \times 10^6 \quad \dots \quad (1),$$

$$y \leq 1 \times 10^5 \quad \dots \quad (2),$$

and

$$y \geq ax^b \quad \dots \quad (3),$$

and wherein, in the formula (3), a is a coefficient; b is an exponent with a base of x; if x is greater than or equal to $2 \times 10^2$ and less than $5 \times 10^2$, a is $6.06 \times 10^{10}$ and b is -2.51; if x is greater than or equal to $5 \times 10^2$ and less than $1 \times 10^4$, a is $1.44 \times 10^7$ and b is -1.17; if x is greater than or equal to $1 \times 10^4$ and less than $1 \times 10^5$, a is $2.43 \times 10^4$ and b is $-4.77 \times 10^{-1}$; and if x is greater than or equal to $1 \times 10^5$ and less than or equal to $1 \times 10^6$, a is $1.00 \times 10^2$ and b is 0.

7. The laminated plate according to claim 6, wherein a following formula is further satisfied:

$$y \geq cx^4,$$

wherein, in the formula, c is a coefficient and d is an exponent with a base of x; if x is greater than or equal to $3 \times 10^2$ and less than $7 \times 10^2$, c is $5.39 \times 10^{11}$ and d is -2.72; if x is greater than or equal to $7 \times 10^2$ and less than $1 \times 10^4$, c is $2.78 \times 10^7$ and d is -1.21; if x is greater than or equal to $1 \times 10^4$ and less than $1 \times 10^5$, c is $1.26 \times 10^3$ and d is $-1.25 \times 10^{-1}$; and if x is greater than or equal to $1 \times 10^5$ and less than or equal to $1 \times 10^6$, c is $2.99 \times 10^2$ and d is 0.

8. The laminated plate according to claim 7, wherein a following formula is further satisfied:

$$y \geq ex^f,$$

wherein, in the formula, e is a coefficient and f is an exponent with a base of x; if x is greater than or equal to $5 \times 10^2$ and less than $9 \times 10^2$, e is $3.74 \times 10^{15}$ and f is -3.92; if x is greater than or equal to $9 \times 10^2$ and less than $1 \times 10^4$, e is $2.83 \times 10^7$ and f is -1.17; if x is greater than or equal to $1 \times 10^4$ and less than $1 \times 10^5$, e is $1.24 \times 10^3$ and f is $-7.92 \times 10^{-2}$; and if x is greater than or equal to $1 \times 10^5$ and less than or equal to $1 \times 10^6$, e is $4.98 \times 10^2$ and f is 0.

9. The laminated plate according to any one of claims 6 to 8, wherein a following formula is further satisfied:

$$y \leq gx^h,$$

wherein, in the formula, g is a coefficient and h is an exponent with a base of x; if x is greater than or equal to $4 \times 10^3$ and less than $6 \times 10^3$, g is $4.96 \times 10^{15}$ and h is -2.97; if x is greater than or equal to $6 \times 10^3$ and less than $3 \times 10^4$, g is $1.80 \times 10^8$ and h is -1.00; if x is greater than or equal to $3 \times 10^4$ and less than $1 \times 10^5$, g is $1.93 \times 10^5$ and h is $-3.37 \times 10^{-1}$; and if x is greater than or equal to $1 \times 10^5$ and less than or equal to $1 \times 10^6$, g is $3.99 \times 10^3$ and h is 0.

10. The laminated plate according to claim 9, wherein a following formula is further satisfied:

$$y \leq ix^j,$$

wherein, in the formula, i is a coefficient and j is an exponent with a base of x; if x is greater than or equal to $2 \times 10^3$ and less than $3 \times 10^3$, i is $6.34 \times 10^{14}$ and j is -2.97; if x is greater than or equal to $3 \times 10^3$ and less than $3 \times 10^4$, i is $9.00 \times 10^7$ and j is -1.00; if x is greater than or equal to $3 \times 10^4$ and less than $1 \times 10^5$, i is $2.05 \times 10^6$ and j is $-6.33 \times 10^{-1}$; and if

$\times$ is greater than or equal to $1 \times 10^5$ and less than or equal to $1 \times 10^6$, i is $1.40 \times 10^3$ and j is 0.

11. The laminated plate according to any one of claims 6 to 8, wherein a following formula is further satisfied:

$$y \leq kx^{1},$$

wherein, in the formula, k is a coefficient and 1 is an exponent with a base of x; if x is greater than or equal to $7 \times 10^3$ and less than $1 \times 10^4$, k is $9.09 \times 10^{30}$ and 1 is -6.75; if x is greater than or equal to $1 \times 10^4$ and less than $1.2 \times 10^4$, k is $7.08 \times 10^{12}$ and 1 is -2.22; if x is greater than or equal to $1.2 \times 10^4$ and less than $1 \times 10^5$, k is $3.62 \times 10^4$ and 1 is $-1.91 \times 10^{-1}$; and if $\times$ is greater than or equal to $1 \times 10^5$ and less than or equal to $1 \times 10^6$, k is $4.02 \times 10^3$ and 1 is 0.

12. The laminated plate according to claim 11, wherein a following formula is further satisfied:

$$y \leq mx^{n},$$

wherein, in the formula, m is a coefficient and n is an exponent with a base of x; if x is greater than or equal to $6 \times 10^3$ and less than $9 \times 10^3$, m is $2.74 \times 10^{27}$ and n is -5.94; if x is greater than or equal to $9 \times 10^3$ and less than $1.2 \times 10^4$, m is $1.26 \times 10^{15}$ and n is -2.82; if x is greater than or equal to $1.2 \times 10^4$ and less than $1 \times 10^5$, m is $8.62 \times 10^4$ and n is $-3.27 \times 10^{-1}$; and if x is greater than or equal to $1 \times 10^5$ and less than or equal to $1 \times 10^6$, m is $2.00 \times 10^3$ and n is 0.

13. A method of producing a laminated plate comprising:

a bonding process of bonding a first plate and a second plate by an intermediate film, wherein the first plate includes a first main surface arranged at a side opposite to the intermediate film, and a second main surface that contacts the intermediate film, the first plate having higher bending stiffness, compared to the second plate, wherein the second plate is a glass plate having a third main surface that contacts the intermediate film, and a fourth main surface arranged at a side opposite to the intermediate film, wherein, when, among cross sections including a normal line at a centroid of the first main surface, a cross section in which a radius of curvature of the first main surface becomes a maximum is a transverse section, and a cross section perpendicular to the transverse section is a longitudinal section, in a natural state prior to bonding, a radius of curvature of the second main surface is smaller than a radius of curvature of the third main surface both in a cross section corresponding to the transverse section and in a cross section corresponding to the longitudinal section, and wherein a maximum value of bending compressive stress at an outer peripheral portion of the fourth main surface is less than or equal to 100 MPa.

14. A method of producing a laminated plate comprising:

a bonding process of bonding a fist plate and a second plate by an intermediate film, wherein the first plate includes a first main surface arranged at a side opposite to the intermediate film, and a second main surface that contacts the intermediate film, the first plate having higher bending stiffness, compared to the second plate, wherein the second plate is a glass plate having a third main surface that contacts the intermediate film, and a fourth main surface arranged at a side opposite to the intermediate film, wherein, when, among cross sections including a normal line at a centroid of the first main surface, a cross section in which a radius of curvature of the first main surface becomes a maximum is a transverse section, and a cross section perpendicular to the transverse section is a longitudinal section, in a natural state prior to bonding, a radius of curvature of the second main surface is smaller than a radius of curvature of the third main surface both in a cross section corresponding to the transverse section and in a cross section corresponding to the longitudinal section, wherein, when a radius of curvature (mm) of the first main surface in the transverse section is x, and a radius of curvature of the first main surface in the longitudinal section is y, following formulas (1) through (3) are satisfied:

$$x \leq 1 \times 10^6 \ \ldots \ (1),$$

$$y \leq 1 \times 10^5 \ \ldots \ (2),$$

and

$$y \geq ax^{b} \ \ldots \ (3),$$

and wherein, in the formula (3), a is a coefficient; b is an exponent with a base of x; if x is greater than or equal to $2 \times 10^2$ and less than $5 \times 10^2$, a is $6.06 \times 10^{10}$ and b is -2.51; if x is greater than or equal to $5 \times 10^2$ and less than $1 \times 10^4$, a is $1.44 \times 10^7$ and b is -1.17; and if x is greater than or equal to $1 \times 10^4$ and less than $1 \times 10^5$, a is $2.43 \times 10^4$ and b is $-4.77 \times 10^{-1}$.

FIG.1

FIG.2

## FIG.3

17

16

12

11

15

14

## FIG.4

17

16

12

11

15

14

# FIG.5

$y = gx^h$

$y = ix^j$

$y = mx^n$

$y = kx^l$

$y = ex^f$

$y = cx^d$

$y = ax^b$

y (mm)

x (mm)

$1 \times 10^5$

$1 \times 10^4$

$1 \times 10^3$

$1 \times 10^2$

$1 \times 10^2$

$1 \times 10^3$

$1 \times 10^4$

$1 \times 10^5$

$1 \times 10^6$

**EP 3 138 689 A1**

Europäisches
Patentamt
European
Patent Office
Office européen
des brevets

# EUROPEAN SEARCH REPORT

Application Number

EP 16 18 5665

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,D | JP 2007 197288 A (NIPPON SHEET GLASS CO LTD) 9 August 2007 (2007-08-09) * abstract; figures * | 1,13 | INV. B32B17/10 |
| X | US 2007/223096 A1 (O'CONNOR KEVIN [CA] ET AL) 27 September 2007 (2007-09-27) * paragraph [0057] - paragraph [0060]; figures 13-15 * | 1-5,13 | |
| X | US 2014/141206 A1 (GILLARD QUENTIN [BE] ET AL) 22 May 2014 (2014-05-22) * paragraph [0051] - paragraph [0068]; claims; figures 1a,1b,5 * | 1-14 | |
| A | US 2014/312518 A1 (LEVASSEUR FABIEN [FR] ET AL) 23 October 2014 (2014-10-23) * paragraph [0013] * | 1,6 | |
| A | US 4 985 099 A (MERTENS GUY [BE] ET AL) 15 January 1991 (1991-01-15) * examples 1,2 * | 1,6 | TECHNICAL FIELDS SEARCHED (IPC) |
| A | US 2015/224855 A1 (LEGRAND DENIS [FR]) 13 August 2015 (2015-08-13) * paragraph [0011] * | 1,6 | B32B |

The present search report has been drawn up for all claims

| Place of search | Date of completion of the search | Examiner |
|---|---|---|
| Munich | 27 January 2017 | Lindner, Thomas |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

15

## ANNEX TO THE EUROPEAN SEARCH REPORT
## ON EUROPEAN PATENT APPLICATION NO.

EP 16 18 5665

This annex lists the patent family members relating to the patent documents cited in the above-mentioned European search report.
The members are as contained in the European Patent Office EDP file on
The European Patent Office is in no way liable for these particulars which are merely given for the purpose of information.

27-01-2017

| Patent document cited in search report | | Publication date | Patent family member(s) | | Publication date |
|---|---|---|---|---|---|
| JP 2007197288 | A | 09-08-2007 | NONE | | |
| US 2007223096 | A1 | 27-09-2007 | BR | PI0709126 A2 | 28-06-2011 |
| | | | CA | 2636401 A1 | 27-09-2007 |
| | | | EP | 1996873 A1 | 03-12-2008 |
| | | | US | 2007223096 A1 | 27-09-2007 |
| | | | US | 2011085257 A1 | 14-04-2011 |
| | | | US | 2013027794 A1 | 31-01-2013 |
| | | | WO | 2007108861 A1 | 27-09-2007 |
| US 2014141206 | A1 | 22-05-2014 | BE | 1020051 A3 | 02-04-2013 |
| | | | CN | 103635315 A | 12-03-2014 |
| | | | EA | 201490203 A1 | 30-06-2014 |
| | | | EP | 2729303 A1 | 14-05-2014 |
| | | | JP | 6031099 B2 | 24-11-2016 |
| | | | JP | 2014527011 A | 09-10-2014 |
| | | | US | 2014141206 A1 | 22-05-2014 |
| | | | WO | 2013004473 A1 | 10-01-2013 |
| US 2014312518 | A1 | 23-10-2014 | CN | 103930270 A | 16-07-2014 |
| | | | CN | 103998705 A | 20-08-2014 |
| | | | EA | 201490987 A1 | 29-08-2014 |
| | | | EA | 201490988 A1 | 30-10-2014 |
| | | | EP | 2780161 A1 | 24-09-2014 |
| | | | EP | 2780527 A1 | 24-09-2014 |
| | | | FR | 2982855 A1 | 24-05-2013 |
| | | | JP | 2015502901 A | 29-01-2015 |
| | | | JP | 2015508369 A | 19-03-2015 |
| | | | KR | 20140093681 A | 28-07-2014 |
| | | | KR | 20140122288 A | 17-10-2014 |
| | | | US | 2014308464 A1 | 16-10-2014 |
| | | | US | 2014312518 A1 | 23-10-2014 |
| | | | WO | 2013072611 A1 | 23-05-2013 |
| | | | WO | 2013072612 A1 | 23-05-2013 |
| US 4985099 | A | 15-01-1991 | BE | 1002769 A5 | 04-06-1991 |
| | | | DE | 3919290 A1 | 21-12-1989 |
| | | | FR | 2632950 A1 | 22-12-1989 |
| | | | GB | 2221424 A | 07-02-1990 |
| | | | IT | 1232107 B | 23-01-1992 |
| | | | JP | H0231925 A | 01-02-1990 |
| | | | LU | 87241 A1 | 28-02-1990 |
| | | | US | 4985099 A | 15-01-1991 |
| US 2015224855 | A1 | 13-08-2015 | NONE | | |

EPO FORM P0459

For more details about this annex : see Official Journal of the European Patent Office, No. 12/82

**EP 3 138 689 A1**

**REFERENCES CITED IN THE DESCRIPTION**

**Patent documents cited in the description**

- JP 2007197288 A

- JP 2015171393 A